# FASCICULE DE BREVET EUROPEEN

(11) **EP 0 657 276 B1**
(45) Date de publication et mention de la délivrance du brevet: **17.03.1999**
(21) Numéro de dépôt: 94830570.1
(22) Date de dépôt: 09.12.1994
(51) Int. Cl.: B31F 5/04

(54) **Machine encolleuse pour le doublage de feuilles encollées avec des cartons de renforcement**
Klebemaschine zum Verstärken von Papier mit Karton
Glueing machine for reinforcing paper with carton

(30) Priorité: 13.12.1993 IT PT930020
(43) Date de publication de la demande: 14.06.1995
(73) Titulaire: Santini, Renzo, I-51030 Serravalle Pistoiese (Pistoia) (IT)
(72) Inventeur: Santini, Renzo, I-51030 Serravalle Pistoiese (Pistoia) (IT)
(74) Mandataire: Martini, Lazzaro

(56) Documents cités:
- EP-A- 0 272 153
- DE-A- 3 218 565
- DE-U- 8 611 853
- FR-A- 2 241 344
- FR-A- 2 496 552

## Description

La presente invention concerne une machine encolleuse, spécialement pour le doublage de feuille en papier à des respectifs cartons pour le renforcement.

Sont connues des machines encolleuses pour papeterie, comprenantes des moyens pour distribuer une couche de colle sur la page supérieure des feuilles destinées à être assemblées une par une à un carton de renforcement, avec un rouleau applé "enduiseur" lequel est opportunement alimenté de colle et avec une paire de rouleaux pour l'entraînement des feuilles pour en permettre le positionnement en correspondance du rouleau enduiseur.
Mais ces machines déjà connues ne permettent pas de réaliser tous les réglages nécessaires au traitement des feuilles de differents formats et nature, ainsi que en changeant le format et la typologie des feuilles il faut chaque fois proceder à un grand nombre des réglages manuelles, ce qu'il rend les machines déjà connues inadaptes aux eventuelles exigences de production.

Dans d'autres secteurs techniques, comme par exemple, ce-lui des machines à photocopier, des alimentateurs pour feuilles en papier sont connus, comme ce-lui décrit en EP-A-0 272 153. Un alimentateur de ce type comprend un pont mobile de support d'une pile de feuilles avec des moyens permettant le soulèvement intermittent du pont, une tête de support pour des moyens à ventouse étant munie d'une buse, une tête aspirante étant associée à une courroie perforée fermée en anneau.
Un pont mobile de support est connu aussi du document DE-U-86 11 853.
Avec des tels appareillages, il est possible un prélèvement de façon automatique des feuilles, lesquelles sont soulevées par le pont mobile jusqu'à la station de prélèvement, mais il n'est pas consenti de prélèver des feuilles d'epaîsseur et conformation différents.

Le but principal de la presente invention est celui d'éliminer les précités inconvenients. A ce resultat, on est parvenu, conformément à l'invention, en adoptant l'idée de réaliser une machine ayante les caracteristiques décrites dans la revendication 1.

D'autres caracteristiques de l'invention sont objet des revendications indépendantes.

Les avantages qui derivent de la presente invention consistent essentiellement en ce que, avec une même machine et en automatique, il est possible réaliser le traitement des feuilles en papier ou carton de differents formats et de differente typologie et épaisseur, comme par exemple le papier et le carton lisses, à micro-onde et à onde basse du type recouvert ou découvert; qu'il est possible programmer la mise en marche, la durée et l'arrêt de chaque phase opérationnelle, de manière à permettre le maximum de précision dans l'execution de chaque commande, quelqu'il soit le format et le type de materiel en papier à façonner; qu'une machine conformément à l'invention est de fabrication simple, fiable même après une longue période d'utilisation et capable d'assurer une production très élevée.

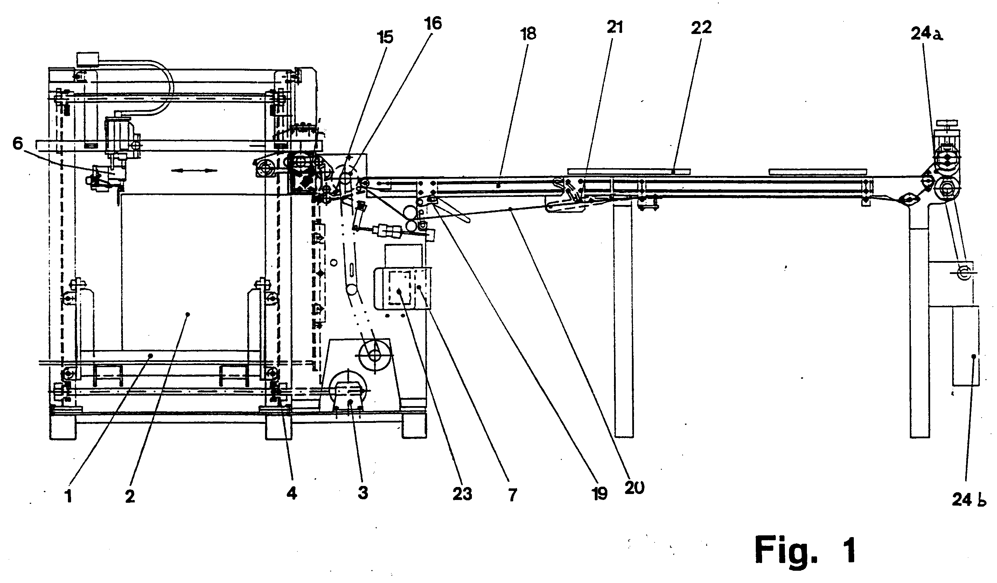

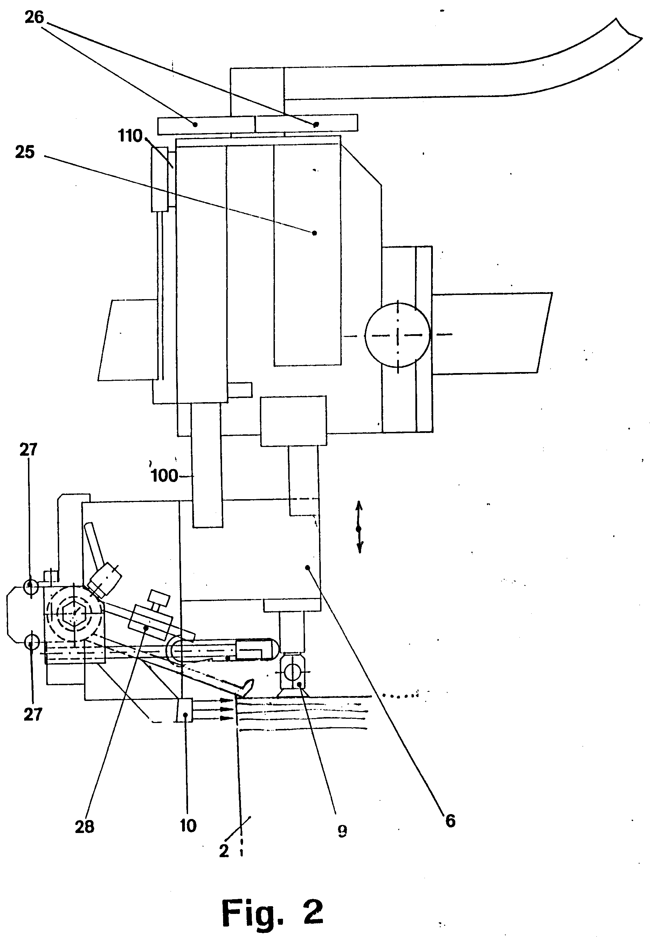

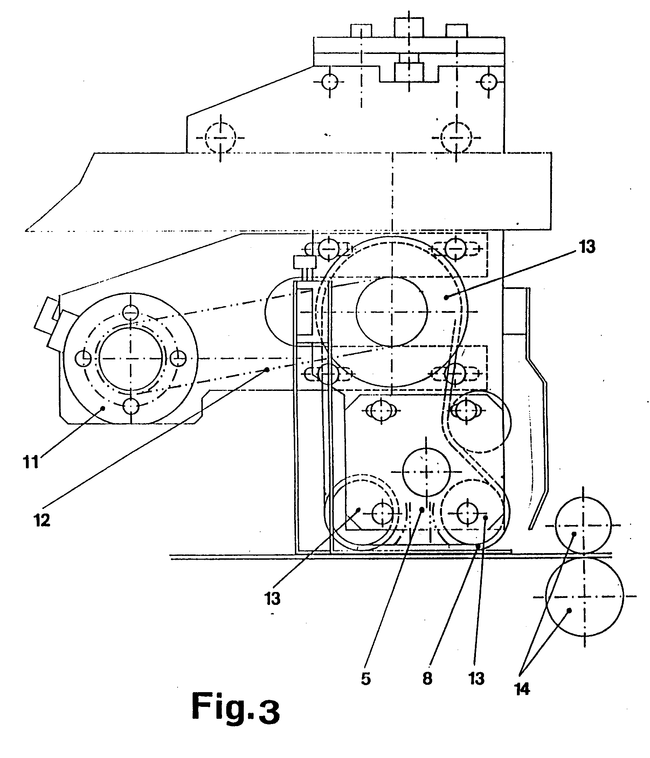

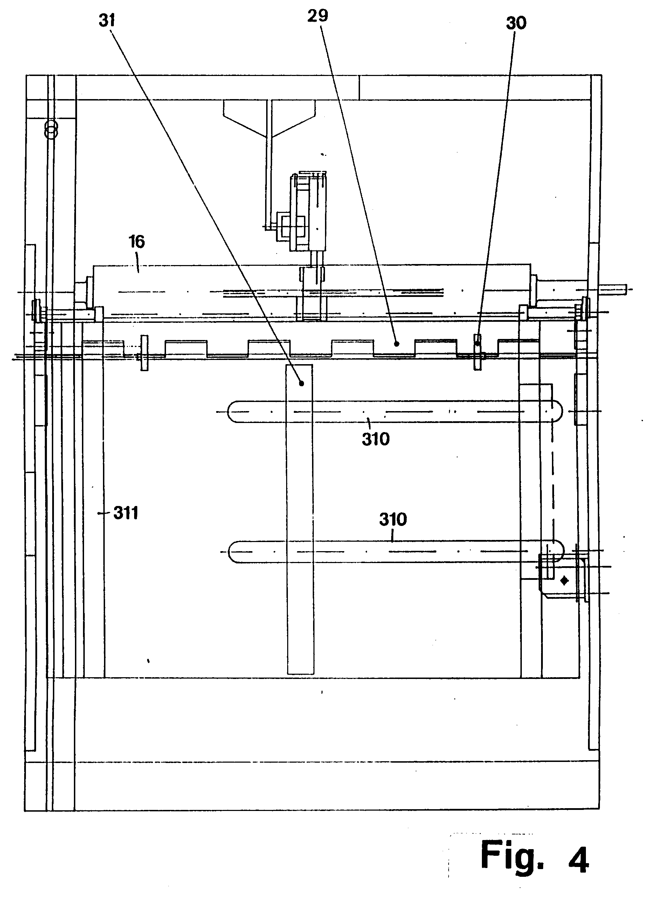

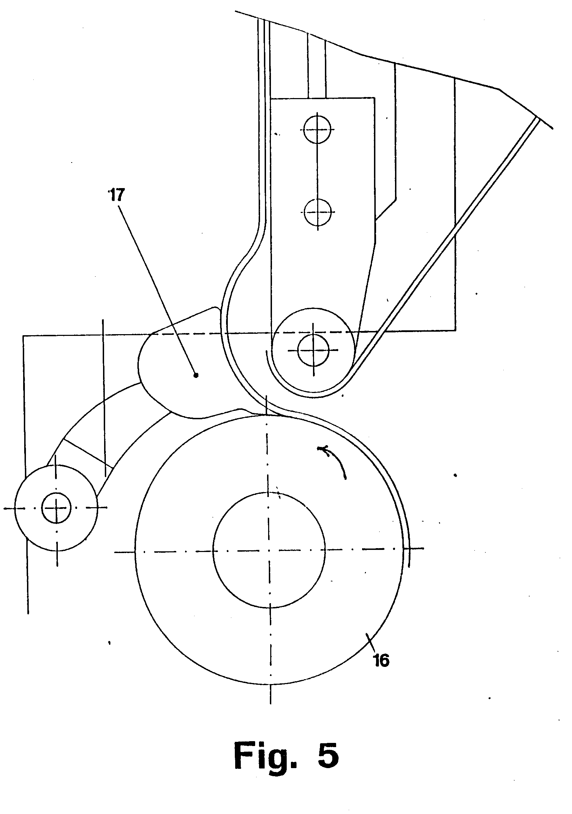

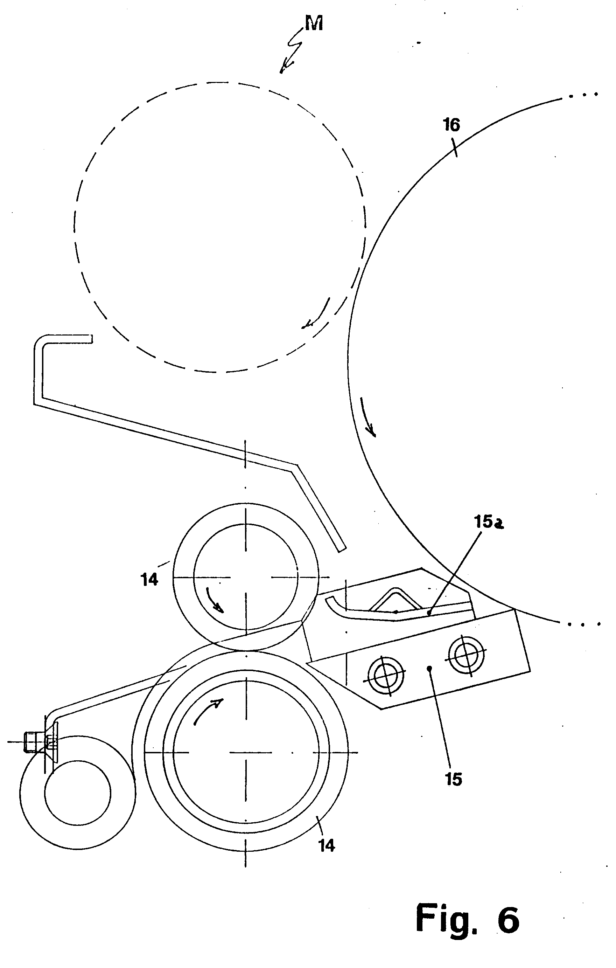

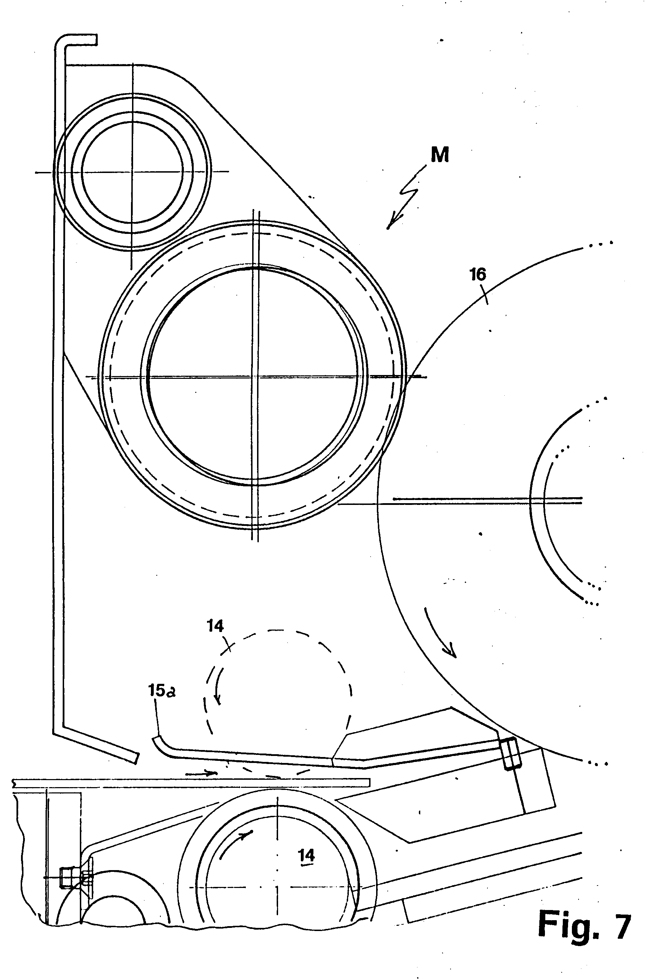

Ces avantages et caractéristiques de l'invention ainsi que d'autres seront plus et mieux compris de chaque homme du métier à la lumière de la description qui va suivre et à l'aide des dessins annexés, donnés à titre d'exemplification pratique de l'invention mais à ne pas considerer dans le sens limitatif, sur lesquels: la Fig. 1 répresente schématiquement la vue latérale d'une machine encolleuse conformément à l'invention; la Fig. 2 répresente schématiquement le détail de la tête de prélevement des feuilles à façonner d'une pile supportée par un pont mobile de la machine de la Fig. 1; la Fig. 3 répresente le détail d'une tête préposée à l'entraînement des feuilles prélevées par la tête de la Fig. 2 pour les diriger aux moyens d'encollage; la Fig. 4 répresente la vue en plan des moyens préposés au positionnement des feuilles à envoyer auxdits moyens pour d'encollage; la Fig. 5 répresente le détail d'une plaque destinée au détachement des feuilles du rouleau enduiseur de la machine de la Fig. 1; la Fig. 6 répresente le détail des moyens préposés à l'avancement des feuilles en correspondance dudit rouleau enduiseur; la Fig. 7 répresente le détail des moyens de la Fig. 6 où sont visibles les moyens (M) d'entraînement du rouleau enduiseur.

Reduite à sa structure essentielle et en réference aux dessins annexés, une machine encolleuse pour le doublage, spécialement pour le doublage de feuilles en papier à des respectifs carton de renforcement conformément à l'invention comprenant des moyens pour l'alimentation des feuilles à encoller, des moyens pour l'entraînement des feuilles ainsi alimentées, des moyens pour l'encollage des feuilles ainsi entraînées et des moyens électroniques pour la commande desdits moyens d'alimentation, d'entraînement et d'encollage des feuilles avec une unité centrale à microprocesseurs programmable, pour exemplification ne pas répresenté dans les figures des dessins annexés, et une calandre (24a) pour comprimer chaque ensemble feuille-carton.

Avantageusement, conformément à l'invention et en réference aux Fig. 1 - 3 des dessins annexés, lesdits moyens d'alimentation des feuilles comprennent:
- un pont mobile (1) de support d'une pile (2) de feuilles asservi à un motoréducteur électrique (3) autofreinant;
- un onduleur électronique pour la commande dudit motoréducteur (3), asservi au programme de l'unité centrale pour permettre le soulèvement intermittent du pont (1) à la suite du prélèvement de chaque feuille de ladite pile (2) avec une transmission à arbres et chaines (4);
- une tête (6) de support de moyens à ventouse (9) destinés à effectuer le détachement par aspiration de la partie terminale de la page par rapport à ladite pile (2) sur le pont (1) et asservis à une pompe aspirante (7): ladite tête (6) étant munie d'une buse (10) pour souffler de l'air comprimé dans la direction de la pile (2) des feuilles de manière à faciliter le détachement de la feuille qui se trouve au fur et à mesure au sommet de la pile (2) et étant montée dans une position au-dessus de la pile (2) en correspondance de la partie terminale des feuilles;
- des moyens pour l'entraînement vertical alternatif de ladite tête (6), avec un moteur électrique à courant continu correspondant (25) qui est asservi à son tour à ladite unité centrale en coopération avec une paire vis-écrou (100,110) et un engranage (26) qui agit sur la tête (6);
- une tête aspirante (5) pour le détachement de la partie antérieure de la feuille par rapport à la pile (2), laquelle est disposée à proximité de deux rouleaux (14) d'entraînement de la feuille vers et jusqu'à un rouleau d'encollage (16) de la machine: ladite tête (5) étant associée à une courroie perforée (8) fermée en anneau, actionnée par un moteur électrique correspondant (11) à courant continu controlé par une dynamo tachymétrique et par un codeur incrémentiel, avec courroie de transmission (12) et poulies (13) et avec une branche passant entre la feuille et la tête (5) de manière à permettre son entraînement en maintenant la feuille adhérente à la surface inférieure de la courroie (8) sous l'effet de l'aspiration exercée par la tête (5) à travers les trous de ladite courroie (8).

Avantageusement et en réference à la Fig. 2 des dessins annexés, à ladite tête (6) est associé un palpeur à balancier (28) qui est destiné à activer, séparément, deux interrupteurs de proximité (27) connectés au moteur (25) pour commander sa rotation dans un sens et dans l'autre et permettre ainsi le mouvement vertical alternatif de la tête (6) en fonction de sa position correcte nécessaire par rapport à la pile (2) des feuilles.

En suite, avantageusement et en réference à la Fig. 1 des dessins annexés, en aval dudit rouleau d'encollage (16) est disposé un transporteur à bande (20) fermée en anneau, actionné par un moteur sans balais (23) correspondant, à commande électronique par un codeur incrémentiel absolu pour le contrôle de position pour l'entraînement de la feuille déjà encollée et dont la position est réglable en hauteur, en fonction du type de feuille traité: des moyens de récupération de la longueur utile de la bande (20) étant prévus, avec un mécanisme à leviers (19) et un rouleau d'entraînement (21) destinés à garantir la tension correcte de la bande (20).
Ladite calandre (24a) est actionnée par un motoreducteur (24b) contrôlé par un onduleur électronique.

Le fonctionnement de la machine décrite est le suivant. Le pont (1), commandé par le moteur (3), pourvoit au soulevement de la pile (2) des feuilles, de manière que en correspondance de la mise en marche de chaque cycle opérationnel de la machine, la feuille supérieur de la pile (2) soit en position sousjacente aux têtes (5) et (6). La partie finale de ladite feuille supérieure de la pile (2) est donc soulevée au moyen de l'aspiration par l'intermédiaire des ventouses (9) et le simultané flux d'air comprimé provenant des buses de soufflage (10) en permet le détachement. A ce stade, l'aspiration dans la tête (5) vient activée et, après avoir désactivée la tête (6) pour obtenir le relâchement de la partie finale de la feuille, la courroie (8) réalise le traînement de la même jusqu'à l'amener en correspondance des rouleaux (14). Les rouleaux (14) contrarotatifs, en cooperation avec deux plaques (15,15a) de guidage de la feuilles placées en aval des mêmes rouleaux (14) pour eviter des variations de forme non souhaitées comme par exemple des bombages, portent la feuille jusqu'au contacte avec le rouleau enduiseur (16): l'avancement de la feuille pendant cette phase étant facilité par l'action des buses de soufflage (10). Successivement à l'application de la colle, la feuille se détache du rouleau (16), eventuellement avec l'aide de la plaque (17), et se place sur le transporteur a bande (20) lequel peut être reglé en hauteur pour permettre la correcte sortie de la feuille ainsi collée. En suite, avec la bande (20) opportunement arretée, est appliqué le carton de renforcement (22), manuellement ou en automatique avec des moyens ne pas representés dans les figures des dessins annexés, et la bande (20) est remise en marche pour transporter l'ensemble ainsi obtenu jusqu'aux rouleaux (24a) qu'ils le pressent.

Avantageusement et en réference à la Fig. 4 des dessins annexés, une plaque (31) est prevue apte à former une buttée pour un des côtés de la feuille et coulissante sur des correspondantes glissières (310) pour le guidage des feuille à envoyer audit rouleau (16), en cooperation avec un point de buttée (311) opposé à la plaque.
En outre, une plaque horizontale (29) est avantageusement prevue placée en amont dudit rouleau (16) et mobile verticalement dans les deux directions, à commande d'un groupe pignon-crémaillère (30), pour régler et déterminer la correcte position par rapport au rouleau (16) de chaque feuille en relation à son épaisseur.

## Revendications

1. Machine encolleuse pour le doublage de feuilles encollées avec des cartons de renforcement (22) comprenant des moyens pour l'alimentation des feuilles à encoller, des moyens pour l'entraînement des feuilles ainsi alimentées, des moyens pour l'encollage des feuilles ainsi entraînées et des moyens électroniques pour la commande desdits moyens d'alimentation, d'entraînement et d'encollage des feuilles avec une unité centrale à microprocesseurs programmable et une calandre (24a) pour comprimer chaque ensemble feuille-carton: lesdits moyens d'alimentation des feuilles comprenant un pont mobile (1) de support d'une pile (2) de feuilles asservi à un motoréducteur électrique autofreinant (3); un onduleur électronique pour la commande dudit motoréducteur (3), asservi au programme de l'unité centrale pour permettre le soulèvement intermittent du pont (1) à la suite du prélèvement de chaque feuille de ladite pile (2); une tête (6) de support pour des moyens à ventouse (9) destinés à effectuer le détachement par aspiration de la partie terminale de la feuille par rapport à ladite pile (2) sur le pont (1) et asservis à une pompe aspirante (7): ladite tête (6) étant munie d'une buse (10) pour souffler de l'air comprimé dans la direction de la pile (2) des feuilles de manière à faciliter le détachement de la feuille qui se trouve au fur et à mesure au sommet de la pile (2) et étant montée dans une position au-dessus de la pile (2) en correspondance de la partie terminale des feuilles; une tête aspirante (5) pour le détachement de la partie antérieure de la feuille par rapport à la pile (2), laquelle est disposée à proximité de deux rouleaux (14) d'entraînement de la feuille vers et jusqu'à un rouleau d'encollage (16) de la machine: ladite tête (5) étant associée à une courroie perforée (8) fermée en anneau, actionnée par un moteur électrique correspondant (11) à courant continu contrôlé par une dynamo tachymétrique et par un codeur incrémentiel, avec courroie de transmission (12) et poulies (13) et avec une branche passant entre la feuille et la tête (5) de manière à permettre son entraînement en maintenant la feuille adhérente à la surface inférieure de la courroie (8) sous l'effet de l'aspiration exercée par la tête (5) à travers les trous de ladite courroie (8); caractérisée en ce que lesdits moyens d'alimentation des feuilles comprennent des moyens pour l'entraînement vertical alternatif de ladite tête (6), avec un moteur électrique à courant continu correspondant (25) qui est asservi à son tour à ladite unité centrale en coopération avec une paire vis-écrou (100,110) qui agit sur le corps de la tête (6).

2. Machine selon la revendication 1, caractérisée en ce qu'à ladite tête (6) est associé un palpeur à balancier (28) qui est destiné à activer, séparément, deux interrupteurs de proximité (27) connectés au moteur (25) pour commander sa rotation dans un sens et dans l'autre et permettre ainsi le mouvement vertical alternatif de la tête (6) en fonction de sa position correcte nécessaire par rapport à la pile (2) des feuilles.

3. Machine selon la revendication 1, caractérisée en ce qu'en aval du rouleau d'encollage (16) un transporteur à bande (20) fermée en anneau, est disposé et actionné par un moteur sans balais correspondant pour l'entraînement de la feuille déjà encollée et dont la position est réglable en hauteur, en fonction du type de feuille traité: des moyens de récupération de la longueur utile de la bande (20) étant prévus, avec un mécanisme à leviers (19) et un rouleau d'entraînement (21) destinés à garantir la tension correcte de la bande (20).

## Claims

1. Gluing machine for reinforcing glued sheets with reinforcement carton (22), comprising means for feeding sheets to be glued, means for driving the sheets thus fed, means for gluing the sheets thus driven and electronic means for the control of the said means for feeding, driving and gluing the sheets, with a central unit with programmable microprocessors and a calender (24a) for compressing each sheet-and-carton assembly, the said means for feeding the sheets comprising a mobile supporting bridge (1) for a pile of sheets (2) which is subject to the control of a self-braking electric motor (3); an electronic undulator serving to operate the said reduction motor (3) and subject to the program of the central unit in order to enable the bridge (1) to be intermittently raised on each extraction of a sheet from the said pile (2); a supporting head (6) for a suction system (9) designed to detach the end part of the sheet from the said pile (2) on the bridge (1) and subject to the action of a suction pump (7); the said head (6) being provided with a nozzle (10) serving to blow compressed air towards the pile (2) of sheets, in such a way as to facilitate the detachment of whatever sheet is situated at the top of the pile (2), and mounted above the pile (2) on a level with the end part of the sheets; a suction head (5) serving to detach the front part of the sheet from the pile (2) and situated near two driving rollers (14) for moving the sheet towards and as far as a gluing roller (16) of the machine; the said head (5) being associated with a perforated belt (8) which forms a closed ring and which is actuated by a corresponding DC electric motor(11) controlled by a tachymetric dynamo and by an incremental coder with a transmission belt (12) and pulleys (13) and with a branch passing between the sheet and the head (5) in such a way as to enable it to be driven by causing the sheet to adhere to the lower surface of the belt (8) under the effect of the suction exerted by the head (5) through the holes of the said belt (8); characterized by the fact that the said sheet feeding means comprises means for the alternating vertical drive of the said head (6), with a corresponding DC electric motor (25) controlled in its turn by the said central unit in co-operation with a screw-and-nut assembly (100,110) acting on the body of the head (6).

2. Machine in accordance with Claim 1, characterized by the fact that a balance-bar sensor (28) is associated with the said head (6) and is intended to activate separately two proximity switches (27) connected to the motor (25) in order to cause it to rotate in one direction or in the other, thus enabling the head (6) to perform its alternating vertical movement according to its required correct position in relation to the pile (2) of sheets.

3. Machine in accordance with Claim 1, characterized by the fact that a belt conveyor (20) arranged in a closed ring is provided downstream from the gluing roller and is operated by a corresponding brushless motor for driving the sheet already glued, its height being adjustable in the vertical direction according to the type of sheet treated: means for the restoration of the effective length of the belt (20) being provided, with a lever mechanism (19) and a driving roller (21) which are designed to ensure the correct tension of the belt (20).

## Patentansprüche

1. Klebemaschine zum Verkleben von mit Klebstoff versehenen Blättern mit Verstärkungs-Kartons (22), die folgendes umfaßt: Einrichtungen zum Zuführen der mit Klebstoff zu beschichtenden Blätter, Einrichtungen zum Vorwärtsbewegen der derart zugeführten Blätter, Einrichtungen zum Beschichten der derart vorwärts bewegten Blätter mit Klebstoff und elektronische Einrichtungen zum Steuern der Zuführ-, Bewegungs- und Klebstoffbeschichtungs-Einrichtungen für die Blätter mit einer mit programmierbaren Mikroprozessoren ausgestatteten Zentraleinheit, sowie eine Walzenpresse (24a) zum Zusammendrücken der jeweils aus einem Blatt und einem Karton bestehenden Einheiten, wobei die Einrichtungen zum Zuführen der Blätter folgende Bestandteile aufweisen: eine bewegliche Tragbrükke (1) für einen Blattstapel (2), die von einem selbsthemmenden Untersetzungsgetriebe (3) angetrieben wird, einen elektronischen Undulator zum Steuern dieses Untersetzungsgetriebes (3) der von der Zentraleinheit programmgesteuert wird, um das intermittierende Anheben der Brücke (1) nach dem Abnehmen eines jeden Blattes vom Stapel (2) zu ermöglichen, einen Tragkopf (6) für Saugeinrichtungen (9), die dazu dienen, durch Ansaugen des hinteren Teils des Blattes dieses vom Stapel (2) auf der Brükke (1) abzuheben und die einer Ansaugpumpe (7) zugeordnet sind, wobei der Kopf (6) mit einer Düse (10) versehen ist, die dazu dient, komprimierte Luft in Richtung des Blattstapels (2) so zu blasen, daß das Abheben des Blattes erleichtert wird, das sich jeweils als oberstes auf dem Stapel (2) befindet, wobei dieser Kopf in einer Stellung oberhalb des Stapels (2) im Bereich des hinteren Teils der Blätter montiert ist, einen Ansaugkopf (5) zum Ablösen des vorderen Teils des Blattes vom Stapel (2), der in der Nähe von zwei Antriebswalzen (14) angeordnet ist, die dazu dienen, das Blatt bis zu einer Klebstoffbeschichtungswalze (16) der Maschine zu fördern, wobei der Kopf (5) einem durchbrochenen Endlosförderband (8) zugeordnet ist, das von einem entsprechenden Elektro-Gleichstrommotor (11) angetrieben wird, der von einem Drehzahlgeber und einem Inkrementalkodierer gesteuert wird, mit einem Transmissionsband (12) und Riemenscheiben (13), sowie mit einem Arm, der zwischen dem Blatt und dem Kopf (5) derart hindurch verläuft, daß seine Vorwärtsbewegung möglich ist und er das Blatt, das an der Unterseite des Förderbandes (8) unter der Wirkung der vom Kopf (5) durch die Löcher des Förderbandes (8) hindurch ausgeübten Ansaugung anhaftet, festhält, dadurch gekennzeichnet, daß die Zuführeinrichtungen für die Blätter Einrichtungen für einen hin- und hergehenden Vertikalantrieb des Kopfes (6) mit einem entsprechenden elektrischen Gleichstrommotor (25) umfassen, der seinerseits von der Zentraleinheit im Zusammenwirken mit einem Paar von Schraubenmuttern (100, 110) gesteuert wird, das auf den Körper des Kopfes (6) einwirkt.

2. Maschine nach Anspruch 1, dadurch gekennzeichnet, daß dem Kopf (6) ein Schwinghebel-Fühler (28) zugeordnet ist, der dazu dient, getrennt zwei Näherungsschalter (27) zu betätigen, die mit dem Motor (25) verbunden sind, um seine Drehung in dem einen und im entgegengesetzten Sinn zu steuern und somit die vertikal hin- und hergehende Bewegung des Kopfes (6) in Abhängigkeit von seiner korrekten Position zu steuern, die bezüglich des Blattstapels (2) erforderlich ist.

3. Maschine nach Anspruch 1, dadurch gekennzeichnet, daß in Bewegungsrichtung hinter der Klebstoffbeschichtungswalze (16) ein Endlos-Transportband (20) angeordnet ist, das von einem entsprechenden bürstenlosen Motor betätigt wird, um ein jeweils mit Klebstoff beschichtetes Blatt vorwärts zu bewegen, dessen Höhenposition in Abhängigkeit von der Art des zu bearbeitenden Blattes regelbar ist, wobei Einrichtungen zur Wiederherstellung der Nutzlänge des Bandes (20) vorgesehen sind, die einen Hebelmechanismus (19) und eine Antriebswalze (21) umfassen und dazu dienen, die korrekte Spannung des Bandes (20) sicherzustellen.
